# EUROPEAN PATENT SPECIFICATION

(11) **EP 0 589 584 B1**
(45) Date of publication and mention of the grant of the patent: **16.12.1998**
(21) Application number: 93306993.2
(22) Date of filing: 03.09.1993
(51) Int. Cl.: B62D 33/06

(54) **Motor truck having a cab**
Lastkraftwagen mit einem Fahrerhaus
Camion ayant une cabine de conducteur

(30) Priority: 25.09.1992 JP 72997/92 U
(43) Date of publication of application: 30.03.1994
(60) Divisional application: 97111627.2
(73) Proprietor: AITO SYOJI KABUSHIKI KAISHA, Nagoya-shi, Aichi-ken (JP)
(72) Inventor: Maeda, Gengo, c/o Aito Syoji Kabushiki Kaisha, Nagoya-shi, Aichi-ken (JP)
(74) Representative: Linn, Samuel Jonathan

(56) References cited:
- DE-A- 1 966 196
- DE-C- 807 897
- US-A- 2 490 162
- "Leyland Panther"; Leaflet No. 880a; Leyland Motors; Issued May, 1966.

## Description

The present invention relates in general to a motor truck for transporting freight, and more particularly to a motor truck which assures efficient, safe transportation of the freight and has increased load capacity. More particularly, the invention relates to a motor truck having the features of the first part of claim 1.

There has been a rapidly growing demand for land transportation of goods, commodities or freight by motor trucks, in place of railways, keeping pace with high economic growth, remarkable technological innovation and developments, and extension and improvement of superhighway or speedway networks, in the recent years. In an effort to meet this growing demand for the freight transportation by motor trucks, various attempts and studies have been made heretofore for improving the transportation efficiency by increasing the size of the motor trucks.

In the recent transportation by land, motor trucks of so-called "cab-over-engine" type are prevailing over so-called "cab-behind-engine" type, since the rear body or freight loading deck of the cab-over-engine type has a larger surface area, owing to the arrangement in which an engine is disposed ahead of the front axle while a cab is located over the engine.

However, the cab-over-engine type motor truck more or less suffers from low running stability, due to a relatively high position of the cab disposed over the engine, which causes a relatively high position of the gravity center of the vehicle. Further, the weight of the freight can be supported only by the rear body whose length is considerably shorter than the entire length of the truck.

It is known in the utility vehicle industry to position the engine behind the rear axle of the construction, and to operatively connect it to the rear axle. One example of such layouts is given in "Leyland Panther"; Leaflet No. 880a: Leyland Motors; Issued May, 1996. For increased efficiency and safety of freight transportation, the inventor of the present invention proposed a motor truck of so-called "cab-ahead-body" type as disclosed in Publication No. 44-4161 of examined Japanese Utility Model Application (published for opposition purpose).

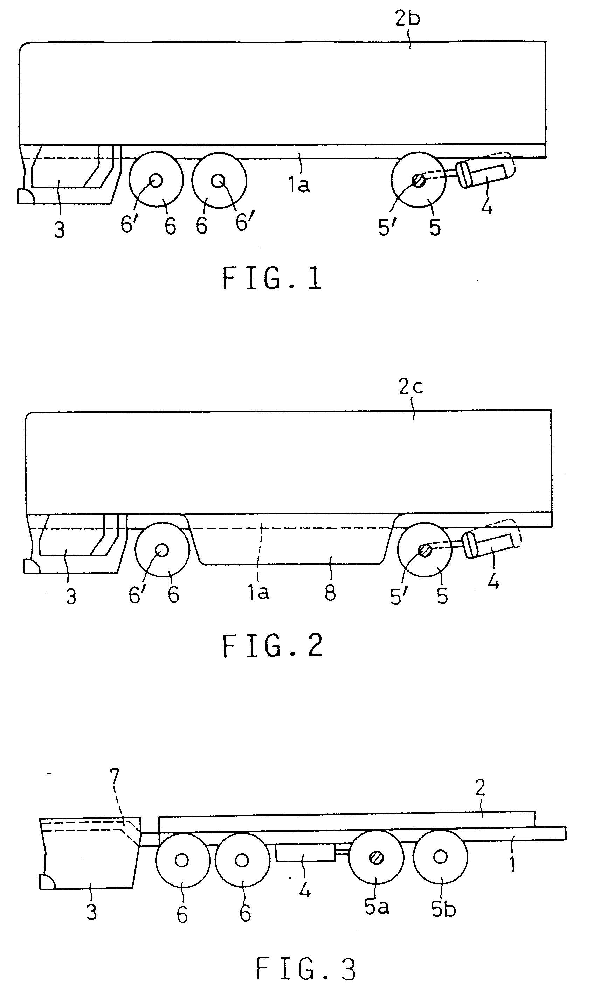

Referring to Fig. 3, the cab-ahead-body motor truck has a frame 1, a freight loading deck 2 mounted on the frame 1, a cab 3 connected to the front end of the frame 1 and an engine 4 suspended from the frame 1. Front and rear axles rotatable with respective wheels 5a, 5b, 6 are fixed through a suspension system to the frame 1. One of the two pairs of rear wheels 5a, 5b is operatively connected to the engine 4, to serve as the driving wheels 5a. The front wheels 6 are steering wheels. The frame 1 is provided with a cab support 7 extending from its front end in the forward direction, so that the cab 3 is suspended from the cab support 7.

In the cab-ahead-body type motor truck described above, the support portion of the cab support 7 is almost flush with the upper surface of the deck 2, and the cab 3 suspended from the cab support 7 is positioned such that the bottom of the cab 3 is at the lowermost limit according to the appropriate regulation on the transportation vehicles. Further, the suspension of the cab 3 from the support 7 prevents direct transmission of vibrations from the frame 1 to the cab 3. Thus, the cab 3 whose gravity center is lower than the upper surface of the deck 2 contributes to lowering the gravity center of the motor truck. Further, the cab 3 located ahead of the deck 2 and the engine 4 located under the deck 2 cooperate to permit the entire length of the deck 2 to be used for supporting the freight. Consequently, the cab-ahead-body type motor truck is capable of transporting relatively long, heavy articles in a relatively efficient and safe manner.

However, the length of the deck 2 which is determined by the length of the frame 1 is considerably smaller than the entire length of the truck which includes the length of the cab 3 suspended from the cab support 7. In other words, the effective length of the truck usable for supporting the freight is determined by and limited to the length of the frame 1 which is smaller than the entire length of the truck. Accordingly, the cab-ahead-body motor truck is not completely satisfactory in terms of the load capacity per length of the truck.

US-A- 2 490 162 discloses in combination the features of the first part of claim 1.

It is therefore an object of the present invention to provide a motor truck capable of transporting a freight in an efficient, safe manner, while effectively utilizing the entire length of the truck for supporting or accommodating the freight, in particular imposing height balancing of the truck even when unloaded. The above object may be achieved according to the principle of the present invention, which provides a motor truck as set out in claim 1.

In the cab-under-body motor truck or the present invention constructed as described above, the length of the body for supporting the freight is substantially equal to the entire length of the truck. This full-length body is available because the cab and the engine are both disposed under the full-length body. Thus, the entire length of the motor truck can be effectively utilized for supporting or accommodating the freight, whereby the load capacity of the present motor truck per length of the truck, and the maximum freight length are significantly increased over the conventional cab-behind-engine type, cab-over-engine type and cab-ahead-body type. Thus, the present motor truck has considerably increased freight transporting efficiency. Further, the running stability and safety of the present motor truck are improved owing to the position of the cab and engine disposed under the full-length body.

The running stability of the motor truck is further improved because the engine is located behind the rear axle as the driving axle. In this case, the weight of the cab located ahead of the front axle is more or less counterbalanced by the weight of the engine (and the related components) located behind the rear axle, whereby the stability of running without a freight is improved. This arrangement also provides a relatively lower gravity center of the truck as a whole, and assures enhanced running and steering stability, without side slipping of the rear wheels upon cornering of the vehicle along a sharp curve or abrupt brake application.

The truck has a frame to which the front and rear axles are fixed and on which the full-length body is mounted. The length of the frame is substantially the same as the length of the full-length body, i.e., the entire length of the truck. In this case, the cab is suspended from the frame such that the cab is located ahead of the front axle, for example, located at the extreme front end of the frame.

The full-length body is a van-type box structure in which the freight is accommodated. The van-type box structure is suitable for transporting general commodities or articles which are relatively small and light.

An auxiliary body or an auxiliary body portion may be disposed between the front and rear axles, such that the auxiliary body is suspended from the frame or the auxiliary body portion has a bottom lower than the axes of the axles. In this case, the load capacity is increased to an extent corresponding to the capacity of the auxiliary body or the auxiliary body portion.

### BRIEF DESCRIPTION OF THE DRAWINGS

The above and optional objects, features and advantages of the present invention will be better understood by reading the following detailed description of presently preferred embodiments of the invention, when considered in connection with the accompanying drawings, in which:
Fig. 1 is a schematic side elevational view of a cab-under-body motor truck of the invention, showing the so-called "full-body" truck;
Fig. 2 is a schematic side elevational view of another embodiment of the invention, in the form of a so-called "full-space" truck; and
Fig. 3 is a schematic side elevational view of a known motor truck of so-called "cab-ahead-body" truck.

Referring to Fig. 1, the the motor truck is provided with two pairs of rear wheels 5 fixedly mounted on rear axle 5' connected to the frame 1a via a suitable suspension system as well known in the art. If more than one pair of rear wheels are provided, the front pair serve as driving wheels. The truck is also provided with two pairs of front wheels 6 fixedly mounted on the opposite ends of respective front axles 6' also connected to the frame 1a via a suitable suspension system. These front wheels 6 serve as steering wheels.

The truck has a full-length body 2b of van-type box structure. The body 2b has the same length as that of the frame 1a, namely, the same length as that of the truck. The box structure of the body 2b is suitable for accommodating various types of general commodities or goods, which are not relatively long or heavy. In this case, the freight accommodated in the van-type body 2b is protected from the environment (rain, wind, etc.). In the present embodiment, only one rear axle 5' and corresponding driving rear wheels 5 are provided.

The motor truck also has a cab 3 secured to the front end portion of the frame 1a such that the cab 3 is disposed under the corresponding front end portion of the body 2b. More specifically, the cab 3 is suspended from the frame 1a such that the roof panel of the cab 3 is substantially flush with the upper surface of the frame 1a (lower surface of the body 2b). Thus, the cab 3 is located ahead of the front axles 6'. As well known in the art, the cab 3 is a box structure in which there are provided one or more seats, a steering wheel, an accelerator pedal, a brake pedal, a clutch pedal, and other devices for operating the truck.

According to the above arrangement, the cab 3 has almost the same height from the ground level as driver's compartments of ordinary passenger cars. It is possible to flexibly connect the cab 3 to the frame 1a through a suitable suspension or cushioning system, to isolate the cab 3 from vibrations transmitted from the frame 1a and body 2b

A power assembly including an engine 4 and a transmission is suspended from the rear end portion of the frame 1a such that the engine 4 is disposed under the deck 2a and located behind the rear axle 5'. The engine 4 is operatively connected to the rear axle 5' to which the driving wheels 5 are fixed. The engine 4 is not limited to any specific type, and may be any internal combustion engines used for the known motor trucks. For reduced size of the power assembly and assuring the minimum height from the ground level, it is desirable to use a V-type engine or horizontal opposed type engine, which may be either transversely or vertically mounted.

It will be understood that the positioning of the cab 3 and engine 4 under the body permits the entire length of the body 2b to be used for accommodating the freight. Unlike the body provided on the known motor truck, the body 2b has a length equal to the length of the truck, namely, equal to the entire length of the chassis of the truck. Accordingly, the body 2b provides considerably increased load capacity value as compared with that of the body of the known motor truck. Further, the body 2b extends with a flat floor panel over the entire length from the front end to the rear end of the truck.

The increased loading space and load capacity of the present truck result in a significant increase in the transportation efficiency of the truck.

While the conventional measure to improve the transportation efficiency of a motor truck is to increase the size of the truck, the principle of the present invention is a departure from the conventional concept.

In the present truck constructed as described above, the cab 3 which is a part of the chassis is located ahead of the front axles 6', while the engine 4 which is another part of the chassis is located behind the rear axle 5'. Thus, the cab 3 and the engine 4 contribute to weight balancing of the truck in the longitudinal direction, even when the truck is not loaded with a freight. Accordingly, the present motor truck exhibits enhanced running and steering stability, with effectively reduced side slipping of the rear wheels 5 upon sharp cornering or abrupt brake application.

Further, the cab 3 and engine 4 disposed below the frame 1a contribute to lowering the gravity center of the truck, thereby permitting further improved running and steering stability.

Moreover, the entirely straight floor of the body 2b which extends over the entire length of the truck facilitates positioning of the freight so as to assure a good balance of the freight in the longitudinal and transverse directions of the vehicle, which in turn assures good running stability of the vehicle. It is also noted that the relatively long body 2b permits considerably long articles to be readily loaded therein, without disassembling or dividing the articles into smaller sections.

In the present embodiment, the cab 3 is sufficiently distant from the engine 4 which is a source of noises and vibrations, whereby the passengers including the driver suffer from minimum degrees of the noises and vibrations during running of the truck.

It is further noted that the cab 3 located just below the front end portion of the body 2b permits the driver to drive the truck as if the driver was on an ordinary passenger vehicle, because of similar driving height from the ground level. This facilitates visual communications with the drivers of the passenger cars, and avoid incontinences which would be encountered on the conventional cab-over-engine truck, for example, due to a relatively high driving position, which may prevent the driver to observe a location just ahead of the front end of the truck. Accordingly, the position of the cab 3 assures safe operation and running of the truck. Further, the cab 3 disposed at the relatively low position minimizes the passengers' fatigue due to rolling of the vehicle as experienced on the conventional truck whose cab is located at a relatively high position.

A modification of the van-type full-body motor truck of Fig. 1 is illustrated in Fig. 2. This modified truck is of a so-called "full-space" type, which has a main body 2c mounted on the frame 1a, and an auxiliary body 8 disposed under the frame 1a and located between the front and rear axles 6' and 5'. The auxiliary body 8 is also capable of accommodating a freight, and thereby increases the loading space or volume. The main body 2c and the auxiliary body 8 cooperate to provide an integral body having an increased loading space as compared with the body 2b of Fig. 1. In the other aspects, the full-space truck of Fig. 2 is identical with the full-body truck of Fig. 1. The truck according to this third embodiment is particularly suitable for transporting light, bulky commodities.

While the present invention has been described in its presently preferred embodiments, for illustrative purpose only, it is to be understood that the present invention is not limited to the details of the illustrated embodiments, but may be otherwise embodied.

For example, the truck of Fig. 1 may be modified to have a fuel tank disposed between the front and rear axles 6' and 5', and suspended from the frame 1a.

In all the illustrated embodiments, the cab 3 is disposed such that the front end of the cab is located at the extreme front end of the body 2b, 2c. However, the front end of the cab may be spaced some distance behind the extreme front end of the deck or body, provided that the cab is located ahead of the front axles 6'.

## Claims

1. A motor truck comprising:
a full-length body (2b) for supporting freight, said full-length body having a length substantially equal to that of the truck;
a front axle (6') rotatable with front wheels (6), and a rear axle (5') rotatable with rear wheels (5);
a frame (1a) which has substantially the same length as said full-length body and to which said front and rear axles (6',5') are fixed, and wherein said full-length body (2b) is mounted on said frame;
a cab (3) disposed under said full-length body, suspended from said frame (1a) and ahead of said front axle; and
an engine (4) disposed under said full-length body (2b),
characterised in that said engine (4) is located behind said rear axle (5'), and is operatively connected to said rear axle; and
said full-length body consists of a van-type box structure (2b) capable of accommodating the freight.

2. A motor truck according to claim 1, wherein said engine (4) is located at a rear end of said full-length body (2b).

3. A motor truck according to either of the preceding claims, wherein said cab (3) is located at a front end of said full-length body (2b).

4. A motor truck according to any one of claims 1-3, further comprising an auxiliary body (8) disposed under said frame (1a) and between said front and rear axles (6',5'), said auxiliary body being capable of accommodating the freight.

5. A motor truck according to claim 4, wherein said auxiliary body (8) is integral with said full-length body (2c).

6. A motor truck according to any one of the preceding claims, wherein said front wheels (6) are steering wheels.

7. A motor truck according to any one of the preceding claims, wherein said rear wheels are driving wheels (5).

## Patentansprüche

1. Motor-Lastkraftwagen, umfassend:
einen Vollängenkörper (2b) zum Tragen von Frachtgut, wobei die Länge des Vollängenkörpers im wesentlichen jener des Lastkraftwagens entspricht;
eine Vorderachse (6'), an der Vorderräder (6) drehbar sind und eine Hinterachse (5'), an der Hinterräder (5) drehbar sind;
einen Rahmen (1a), der im wesentlichen die gleiche Länge aufweist wie der Vollängenkörper und an dem die Vorder- und die Hinterachse (6', 5') montiert sind, wobei der Vollängenkörper (2b) am Rahmen montiert ist;
ein Fahrerhaus (3), das unter dem Vollängenkörper angeordnet ist, herabhängend vom Rahmen (1a) und vor der Vorderachse; und
einen unter dem Vollängenkörper (2b) positionierten Motor (4);
dadurch gekennzeichnet, daß sich der Motor (4) hinter der Hinterachse (5') befindet und operativ mit ihr verbunden ist; und
der Vollängenkörper aus einer kastenwagenähnlichen Gehäusestruktur (2b) besteht, in der man Frachtgut unterbringen kann.

2. Motor-Lastkraftwagen nach Anspruch 1, worin der Motor (4) an einem hinteren Ende des Vollängenkörpers (2b) angeordnet ist.

3. Motor-Lastkraftwagen nach einem der vorhergehenden Ansprüche, worin das Fahrerhaus an einem vorderen Ende des Vollängenkörpers (2b) positioniert ist.

4. Motor-Lastkraftwagen nach einem der Ansprüche 1-3, weiters umfassend einen Zusatzkörper (8), der unter dem Rahmen (1a) sowie zwischen der Vorder- und Hinterachse (6', 5') angeordnet ist, wobei der Zusatzkörper zur Unterbringung des Frachtguts geeignet ist.

5. Motor-Lastkraftwagen nach Anspruch 4, worin der Zusatzkörper (8) mit dem Vollängenkörper (2c) einstückig ausgebildet ist.

6. Motor-Lastkraftwagen nach einem der vorhergehenden Ansprüche, worin die Vorderräder (6) gelenkte Räder sind.

7. Motor-Lastkraftwagen nach einem der vorhergehenden Ansprüche, worin die Hinterräder Antriebsräder (5) sind.

## Revendications

1. Camion comprenant :
une caisse à pleine longueur (2b) pour supporter un fret, ladite caisse à pleine longueur ayant une longueur sensiblement égale à celle du camion ;
un essieu avant (6') pouvant tourner avec des roues avant (6), et un essieu arrière (5') pouvant tourner avec des roues arrière (5) ;
un châssis (1a) qui a sensiblement la même longueur que ladite caisse à pleine longueur et auquel lesdits essieux avant et arrière (6', 5') sont fixés, ladite caisse à pleine longueur (2b) étant montée sur ledit châssis ;
une cabine (3) disposée sous ladite caisse à pleine longueur, suspendue audit châssis (la) et à l'avant dudit essieu avant ; et
un moteur (4) disposé sous ladite caisse à pleine longueur (2b),
caractérisé en ce que ledit moteur (4) est situé derrière ledit essieu arrière (5'), et est relié fonctionnellement audit essieu arrière ; et
ladite caisse à pleine longueur consistant en une structure (2b) à caisson du type fourgon capable de loger le fret.

2. Camion selon la revendication 1, dans lequel ledit moteur (4) est situé à une extrémité arrière de ladite caisse à pleine longueur.

3. Camion selon l'une quelconque des revendications précédentes, dans lequel ladite cabine (3) est située à une extrémité avant de ladite caisse à pleine longueur (2b).

4. Camion selon l'une quelconque des revendications 1 à 3, comprenant en outre une caisse auxiliaire (8) disposée sous ledit châssis (1a) et entre lesdits essieux avant et arrière (6', 5'), ladite caisse auxiliaire étant capable de loger le fret.

5. Camion selon la revendication 4, dans lequel ladite caisse auxiliaire (8) est intégrée avec ladite caisse à pleine longueur (2c).

6. Camion selon l'une quelconque des revendications précédentes, dans lequel lesdites roues avant (6) sont des roues de direction.

7. Camion selon l'une quelconque des revendications précédentes, dans lequel lesdites roues arrière sont des roues motrices (5).
